# EUROPÄISCHE PATENTSCHRIFT

(11) **EP 2 846 146 B1**
(45) Veröffentlichungstag und Bekanntmachung des Hinweises auf die Patenterteilung: **08.01.2020**
(21) Anmeldenummer: 13183376.6
(22) Anmeldetag: 06.09.2013
(51) Int. Cl.: G01N 17/00

(54) **Bewitterungsprüfung mit mehreren unabhängig voneinander ansteuerbaren Strahlungsquellen**
weathering test with multiple independently controllable radiation sources
essai de vieillissement avec plusieurs sources de rayonnement commandables indépendamment

(43) Veröffentlichungstag der Anmeldung: 11.03.2015
(73) Patentinhaber: Atlas Material Testing Technology GmbH, 63589 Linsengericht/Altenhasslau (DE)
(72) Erfinder: RUDOLPH, Bernd, 63755 Alzenau (DE); MARCH, Peter, 65931 Frankfurt. (DE)
(74) Vertreter: Lambsdorff & Lange Patentanwälte Partnerschaft mbB

(56) Entgegenhaltungen:
- EP-A1- 0 487 202
- EP-A1- 1 528 388
- DE-A1- 3 221 392
- DE-U1- 9 100 816
- US-A1- 2010 000 344

## Beschreibung

Die vorliegende Erfindung betrifft eine Vorrichtung zur künstlichen Bewitterung oder Lichtechtheitsprüfung von Proben und ein Verfahren zur künstlichen Bewitterung oder Lichtechtheitsprüfung von Proben.

In Vorrichtungen zur künstlichen Bewitterung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In derartigen Vorrichtungen zur künstlichen Bewitterung oder Lichtechtheitsprüfung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle Xenon-Gasentladungslampen eingesetzt werden. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist.

In den bisher bekannten Bewitterungsprüfgeräten wird als Strahlungsquelle zumeist eine Xenon-Gasentladungslampe eingesetzt. Mit dieser kann zwar bekanntermaßen das Sonnenspektrum recht gut simuliert werden. Eine handelsübliche Xenon-Lampe weist jedoch nur eine nominelle Lebensdauer von ca. 1500 Stunden bei maximaler Bestrahlungsstärke auf. Das bedeutet, dass die Lampe für diesen Zeitraum bei der maximalen Bestrahlungsstärke betrieben werden kann.

Des Weiteren können als Strahlungsquellen für Bewitterungsgeräte im Prinzip auch Metallhalogenidlampen oder Fluoreszenz-Lampen eingesetzt werden. Diese Lampen weisen zwar üblicherweise eine längere Lebensdauer als Xenon-Lampen auf, sind jedoch hinsichtlich ihrer spektralen Qualität Xenon-Lampen tendenziell unterlegen.
Die Druckschrift EP 1 528 388 A1 offenbart eine Vorrichtung sowie ein Verfahren zur künstlichen Bewitterung oder Lichtechtheitsprüfung von Proben, mit einer Bewitterungskammer, in welcher mindestens eine Probe anordenbar ist, und eine Mehrzahl von Strahlungsquellen, welche in der Bewitterungskammer angeordnet sind und welche unabhängig voneinander betreibbar sind, wobei die Vorrichtung derart konfiguriert ist, dass die mindestens eine Probe auf einer geschlossenen Bahn um die Mehrzahl von Strahlungsquellen bewegbar ist.

Es ist somit Aufgabe der vorliegenden Erfindung, eine Vorrichtung zur künstlichen Bewitterung oder Lichtechtheitsprüfung von Proben und ein Verfahren zur künstlichen Bewitterung oder Lichtechtheitsprüfung von Proben anzugeben, mit welchen eine effektive Nutzungsdauer der in der Vorrichtung eingesetzten Strahlungsquellen gesteigert werden kann.

Diese Aufgabe wird mit den Merkmalen der unabhängigen Patentansprüche gelöst. Vorteilhafte Weiterbildungen und Ausgestaltungen sind Gegenstand von Unteransprüchen.

Eine Vorrichtung zur künstlichen Bewitterung oder Lichtechtheitsprüfung kann so ausgestaltet sein, dass eine Mehrzahl von zu untersuchenden Proben, welche auf einem Halterungsrahmen befestigt sind, auf einer geschlossenen Bahn um eine Strahlungsquelle bewegt werden, indem der Halterungsrahmen eine Drehung um eine zentrale Achse vollführt. Auf oder entlang dieser Drehachse kann die Strahlungsquelle, insbesondere eine Xenon-Gasentladungslampe, angeordnet sein. Für den nicht erfindungsgemässen Fall, dass nur eine Xenon-Gasentladungslampe vorhanden ist, kann diese nach einem erstmaligen Einschaltvorgang beispielsweise konstant bei einer relativ hohen Strahlungsintensität von 60 W/cm² betrieben werden, für welche herstellerseitig beispielsweise eine Lebensdauer von 1500 Stunden garantiert sein kann, wobei dieser Wert für die Strahlungsintensität ein Beispielswert ist und generell vom Lampentyp, der Filterung und des Abstandes von der Lampe abhängt. Eine derart hohe Ausgangsleistung stellt jedoch für die Xenon-Lampe eine relativ hohe Belastung dar, welche eine entsprechend schnelle Alterung zur Folge hat. Es ist zudem bekannt, dass im Betrieb der Xenon-Lampe die in der Nähe der Kathode auftretende Feldstärke, der sogenannte Kathodenfall, mit steigender elektrischer Eingangsleistung zunimmt. Ein hoher Kathodenfall ist jedoch mit eine Ursache für eine niedrige Lebensdauer der Xenon-Lampe. Auf der anderen Seite ist gerade bei Bewitterungsgeräten eine hohe Strahlungsleistung der Xenon-Lampe tendenziell wünschenswert, da dies Voraussetzung für eine effiziente zeitraffende Alterungsprüfung der Proben in dem Bewitterungsgerät ist.

Ein der vorliegenden Erfindung zugrundeliegender Gedanke besteht somit darin, das Alterungsverhalten der Strahlungsquellen zu beeinflussen. Dies kann dadurch erreicht werden, indem nicht nur eine Strahlungsquelle sondern zwei oder mehr Strahlungsquellen innerhalb einer Bewitterungskammer der Vorrichtung zur künstlichen Bewitterung oder Lichtechtheitsprüfung angeordnet werden. Diese mehreren Strahlungsquellen sind vorteilhafterweise unabhängig voneinander betreibbar oder ansteuerbar, so dass es möglich ist, eine wie gewünscht hohe Gesamt-Lichtausgangsleistung für eine effiziente zeitraffende Alterungsprüfung der Proben bereitzustellen, gleichzeitig jedoch dafür zu sorgen, dass die Strahlungsquellen beispielsweise nicht bei sehr hoher Leistung betrieben werden oder beispielsweise nur für Zeiträume von begrenzter Dauer bei hoher Leistung betrieben werden und somit ihr Alterungsprozess verlangsamt werden kann.

Die vorliegende Erfindung bezieht sich somit auf eine Vorrichtung zur künstlichen Bewitterung oder Lichtechtheitsprüfung von Proben mit einer Bewitterungskammer, in welcher mindestens eine Probe anordenbar ist, einer Mehrzahl von Strahlungsquellen, welche in der Bewitterungskammer angeordnet sind und welche unabhängig voneinander betreibbar sind, wobei die Vorrichtung derart konfiguriert ist, dass mindestens eine Probe auf einer geschlossenen Bahn um die Mehrzahl von Strahlungsquellen bewegbar ist.

Gemäß einer Ausführungsform der Vorrichtung sind zwei oder drei Strahlungsquellen in der Bewitterungskammer angeordnet. Es können aber gegebenenfalls auch mehr als drei Strahlungsquellen in der Bewitterungskammer angeordnet sein.

Gemäß der erfindungsgemässen Vorrichtung sind die Strahlungsquellen durch Xenon-Gasentladungslampen gebildet.

Gemäß einer Ausführungsform der Vorrichtung ist in der Bewitterungskammer ein Halterungsrahmen angeordnet, an welchem die zu untersuchenden Proben in geeigneter Weise befestigbar sind. Der Halterungsrahmen kann in eine Eigendrehbewegung versetzt werden, wobei insbesondere die Dreh- oder Symmetrieachse der Drehbewegung im Wesentlichen mit der Lage der Strahlungsquellen zusammenfallen, wobei im Falle von nebeneinander angeordneten Strahlungsquellen die Drehachse beispielsweise durch die geometrische Mitte zwischen den Strahlungsquellen verläuft.

Gemäß der erfindungsgemässen Vorrichtung sind die Strahlungsquellen zeitlich nacheinander und/oder mindestens teilweise gleichzeitig betreibbar. Für den Fall, dass die Strahlungsquellen durch Gasentladungslampen gebildet sind, können die Gasentladungslampen geeignete Vorschaltgeräte aufweisen. In diesem Fall sind die Vorschaltgeräte unabhängig voneinander ansteuerbar. Insbesondere kann eine Steuereinrichtung vorhanden sein, welche eine Mehrzahl von Ausgängen aufweist, um diese mit einer Mehrzahl von Vorschaltgeräten von Gasentladungslampen oder generell mit einer Mehrzahl von Strahlungsquellen zu verbinden.

Gemäß einer Ausführungsform der Vorrichtung weist diese des Weiteren einen Sensor zum Erfassen der Strahlungsleistung der Strahlungsquellen auf. Ein Ausgang des Sensors kann mit einem Eingang einer Steuereinrichtung zur Übermittlung eines die gemessene Strahlungsleistung repräsentierenden Signals verbunden sein. Der Sensor kann insbesondere so angeordnet sein, dass er wie eine Probe mitbewegt wird und somit genau die gleiche Strahlung "sieht" wie die Proben auf ihrem Weg um die Strahlungsquellen. Der Sensor kann dabei in derselben Ebene wie die Proben angeordnet sein und insbesondere innerhalb einer Halterungseinrichtung wie einem Halterungsrahmen ("Rack") auf im Wesentlichen die gleiche Weise wie die Proben gehaltert sein. Der Sensor kann insbesondere auch so ausgebildet sein, dass er ein cosinus-korrigiertes Messsignal generiert und dieses an die Steuereinheit übermittelt. Das bedeutet, dass der Sensor ausgebildet ist, die Abhängigkeit der gemessenen Strahlungsintensität vom Winkel zwischen der auftreffenden Strahlung und der Flächennormalen des Sensors oder eines Bildelements des Sensors zu ermitteln und ein Messsignal zu ermitteln, welches diese Abhängigkeit berücksichtigt bzw. korrigiert.

Es ist jedoch auch möglich, dass eine Mehrzahl von Sensoren angeordnet ist, wobei jeder Sensor einer der Strahlungsquellen zugeordnet sein kann und derart in der Bewitterungskammer angeordnet sein kann, dass er die Strahlungsleistung der ihm zugeordneten Strahlungsquelle misst und ein Ausgang jedes Sensors mit einem Eingang der Steuereinrichtung zur Übermittlung eines die gemessene Strahlungsleistung repräsentierenden Signals verbunden ist. Auch in diesem Fall können die Sensoren so ausgebildet sein, dass sie cosinuskorrigierte Messsignale abgeben können.

Die Steuereinrichtung ist so konfiguriert sein, dass aufgrund einer nutzerseitig gewünschten kombinierten Strahlungsleistung der Strahlungsquellen ein optimaler Betriebsmodus ermittelt wird, bei welchem die Strahlungsquellen geringstmöglichen Belastungen ausgesetzt sind. Zu diesem Zweck kann innerhalb der Steuereinrichtung ein Expertensystem zur Ermittlung des optimalen Betriebsmodus vorhanden sein.

Gemäß einer Ausführungsform der Vorrichtung ist jede Strahlungsquelle mit einer Speichereinrichtung versehen, in welcher Daten über die Strahlungsquelle speicherbar oder gespeichert sind. Die Speichereinrichtung kann beispielsweise ausgebildet sein, dass sie der Autorisierung und/oder Identifizierung der Strahlungsquelle dienen kann. Beispielsweise kann auf ihr eine Information gespeichert sein, die sie als von einem bestimmten Hersteller stammend kennzeichnet und/oder sie eindeutig identifiziert. Die Speichereinrichtung kann insbesondere als Teil eines RFID-Chips oder RFID-Tags gegeben sein. Weiterhin können Daten wie die von jeder Strahlungsquelle geleisteten Betriebsstunden und/oder eine restliche Lebensdauer der Strahlungsquelle ermittelbar und auf der Speichereinrichtung speicherbar sein. Die Speichereinrichtung kann zu diesem Zweck derart mit der Strahlungsquelle verbunden sein, dass sie mit dem Einsetzen in die Bewitterungskammer und dem Verbinden mit den Anschlusskontakten durch die Steuereinrichtung auslesbar ist. In der Steuereinrichtung können dann die von der jeweiligen Strahlungsquelle geleisteten Betriebsstunden gezählt werden und anschließend können entweder die geleisteten Betriebsstunden und/oder die restliche Lebensdauer von der Steuereinrichtung auf der Speichereinrichtung gespeichert werden. Die geleisteten Betriebsstunden und/oder die restliche Lebensdauer können von der Steuereinrichtung ebenso für die Ermittlung des optimalen Betriebsmodus verwendet werden. Die Steuereinrichtung kann auch so ausgebildet sein, dass sie eine Strahlungsquelle erst dann in Betrieb nimmt, wenn eine anfängliche Autorisierung und/oder Identifizierung anhand der von der Speichereinrichtung erhaltenen Daten ein nach vorgegebenen Kriterien positives Resultat erbracht hat.

Ein Verfahren zur künstlichen Bewitterung oder Lichtechtheitsprüfung von Proben weist die Schritte auf:
a. Bereitstellen einer Bewitterungskammer, welche eine Mehrzahl von unabhängig voneinander betreibbaren Strahlungsquellen und eine Halterungseinrichtung für Proben aufweist, durch welche die Proben auf einer geschlossenen Bahn um die Strahlungsquellen führbar sind;
b. Anordnen mindestens einer Probe in der Halterungseinrichtung; und
c. Bestrahlen der Probe mit Strahlung der Strahlungsquellen, wobei die Strahlungsquellen zeitlich nacheinander und/oder mindestens teilweise gleichzeitig betrieben werden.

Gemäß einer Ausführungsform des Verfahrens können zwei Strahlungsquellen vorhanden sein und die gesamte voraussichtliche Nutzungsdauer beider Strahlungsquellen kann in drei Phasen eingeteilt werden, wobei in einer ersten Phase nur eine erste Strahlungsquelle betrieben wird, in einer zweiten Phase nur eine zweite Strahlungsquelle betrieben wird, und in einer dritten Phase beide Strahlungsquellen gleichzeitig betrieben werden.

Gemäß einer Ausführungsform des Verfahrens können zwei Strahlungsquellen vorhanden sein und während der gesamten voraussichtlichen Nutzungsdauer beider Strahlungsquellen können diese gleichzeitig betrieben werden.

Gemäß einer Ausführungsform des Verfahrens kann die Strahlungsleistung oder Strahlungsintensität der von den Strahlungsquellen emittierten Strahlung kontinuierlich gemessen werden und die gemessenen Strahlungswerte können mit einem erwarteten Sollverlauf verglichen werden und bei Abweichungen des gemessenen zeitlichen Verlaufs der gemessenen Strahlungsleistung von dem Sollverlauf kann die der Strahlungsquelle zugeführte elektrische Leistung entsprechend erhöht oder erniedrigt werden.

Im Folgenden wird die Erfindung anhand von Ausführungsbeispielen in Verbindung mit den Zeichnungsfiguren noch näher erläutert. Es zeigen:
Figuren 1A,B einen Querschnitt (A) und einen Längsschnitt (B) durch eine Ausführungsform einer Vorrichtung zur künstlichen Bewitterung oder Lichtechtheitsprüfung mit zwei Strahlungsquellen und einem mitgeführten Sensor.
Fig. 2 einen Querschnitt durch eine Ausführungsform einer Vorrichtung zur künstlichen Bewitterung oder Lichtechtheitsprüfung mit drei Strahlungsquellen und einem mitgeführten Sensor.
Fig. 3 einen Längsschnitt durch eine Ausführungsform einer Vorrichtung zur künstlichen Bewitterung oder Lichtechtheitsprüfung mit zwei Strahlungsquellen und zwei stationären Sensoren.
Fig. 4 ein schematisches Blockschaltbild eines Schaltkreises zur Ansteuerung von zwei Strahlungsquellen einer Vorrichtung zur künstlichen Bewitterung oder Lichtechtheitsprüfung von Proben.
Figuren 5A und 5B Zeitdiagramme zur Veranschaulichung zweier unterschiedlicher Betriebsarten bei Nutzung zweier Strahlungsquellen.

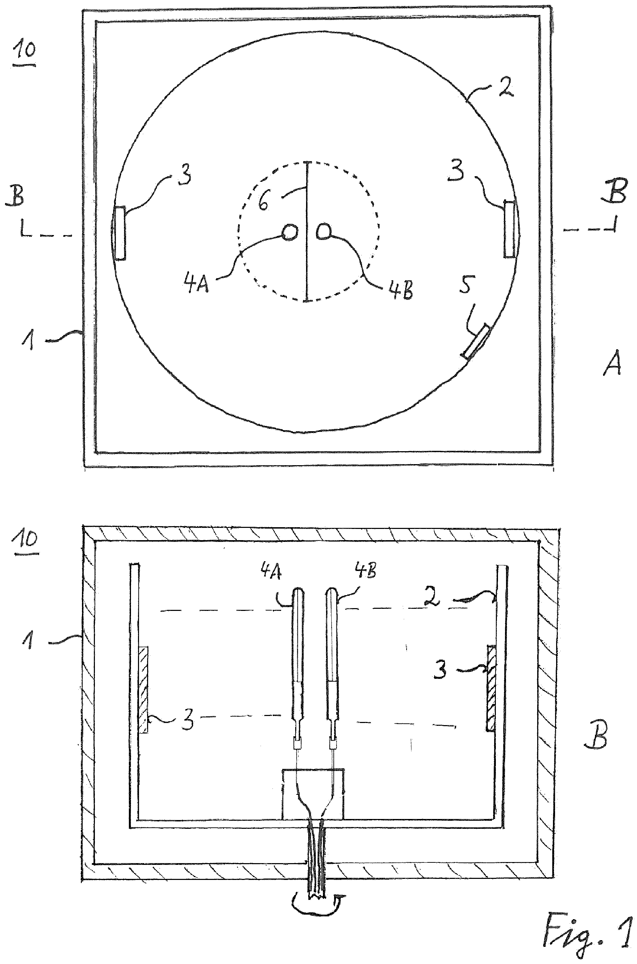

In der Fig. 1A, B ist eine Ausführungsform einer Vorrichtung 10 zur künstlichen Bewitterung oder Lichtechtheitsprüfung von Proben in einem Querschnitt (A) und einem Längsschnitt (B) schematisch dargestellt.

Die Vorrichtung 10 umfasst eine Bewitterungskammer 1, innerhalb der eine künstliche Bewitterung oder Lichtechtheitsprüfung von Proben durchgeführt werden kann. In der Bewitterungskammer 1 ist ein ringförmig geschlossener Halterungsrahmen 2 drehbar gelagert, welcher auf seiner Innenseite geeignet geformte Halterungselemente (nicht gezeigt) aufweist, mittels derer Proben 3 oder Werkstücke, beispielsweise rechteckige Lackproben genormter Größe, gehaltert werden können. Der Halterungsrahmen 2 ist insbesondere in einem seitlichen Querschnitt kreisförmig, so dass die Proben 3 bei Drehung des Halterungsrahmens 2 auf einer geschlossenen Kreisbahn geführt werden. Innerhalb des Halterungsrahmens 2 und im Wesentlichen konzentrisch mit diesem sind zwei Strahlungsquellen 4A und 4B angeordnet, welche beispielsweise durch Xenon-Gasentladungslampen gebildet sein können. Wie dargestellt, können die beiden Strahlungsquellen 4A und 4B durch langgestreckte oder longitudinale Strahlungskörper, insbesondere Glaskolben, gebildet sein, welche zueinander parallel ausgerichtet sind. Die gesamte Anordnung kann dermaßen rotationssymmetrisch ausgebildet sein, dass eine Drehachse der Drehbewegung des Halterungsrahmens 2 mit einer Mittel- oder Symmetrieachse der beiden Strahlungsquellen 4A und 4B zusammenfällt. Es kann vorgesehen sein, dass eine Mehrzahl von Proben 3 an dem Halterungsrahmen 2, insbesondere an dafür vorgesehenen in Umfangsrichtung des Halterungsrahmens 2 angeordneten Halterungselementen befestigt werden können. Es können darüber hinaus die Proben 3 auch in mehreren Ebenen übereinander am Halterungsrahmen 2 befestigt werden. Die Strahlungsquellen 4A und 4B können unabhängig voneinander betreibbar bzw. ansteuerbar sein, wie weiter unten noch näher ausgeführt werden wird.

In der Bewitterungskammer 1 kann des Weiteren ein Strahlungssensor 5 angeordnet sein, welcher die Strahlungsleistung der von den Strahlungsquellen 4A und 4B emittierten Strahlung detektiert. Der Strahlungssensor 5 kann wie die Proben 3 an dem Halterungsrahmen 2 befestigt sein und mit diesen um die aus den zwei Strahlungsquellen 4A,B bestehende Strahlungsanordnung umlaufen, also als mitlaufender Strahlungssensor 5 ausgebildet sein. Das Ausgangssignal des Strahlungssensors 5 kann einer externen Steuereinrichtung zugeführt werden, wie nachfolgend noch näher beschrieben werden wird. Der Strahlungssensor 5 kann so ausgebildet sein, dass er eine von ihm detektierte momentane Strahlungsleistung als ein entsprechendes elektrisches Messsignal ausgibt. Es kann ferner vorgesehen sein, dass zwischen den Strahlungsquellen 4A und 4B ein Absorberblech 6 angeordnet ist, so dass der Strahlungssensor 5 in jeder denkbaren Position auf seiner Umlaufbahn jeweils nur die von einer der Strahlungsquellen 4A,B emittierte Strahlung detektiert. Der Strahlungssensor 5 kann wie dargestellt gegenüber den Proben 3 in Umfangsrichtung der Halterungseinrichtung 2 versetzt angeordnet sein. Er könnte ebenso gut auch ohne Umfangsversetzung in Höhenrichtung gegenüber den Proben 3 oder sowohl in Höhen- als auch in Umfangsrichtung gegenüber den Proben 3 versetzt angeordnet sein.

Die Bewitterungskammer 1 kann in an sich bekannter Weise weitere Einrichtungen zur künstlichen Bewitterung, wie beispielsweise Feuchtigkeitserzeuger oder dergleichen, aufweisen, auf die im Folgenden nicht weiter eingegangen werden soll. Es kann beispielsweise auch ein Luftstrom in die Bewitterungskammer 1 eingeleitet werden, der in vertikaler Richtung an den Proben 3 und/oder an den Strahlungsquellen 4A und 4B vorbei streicht.

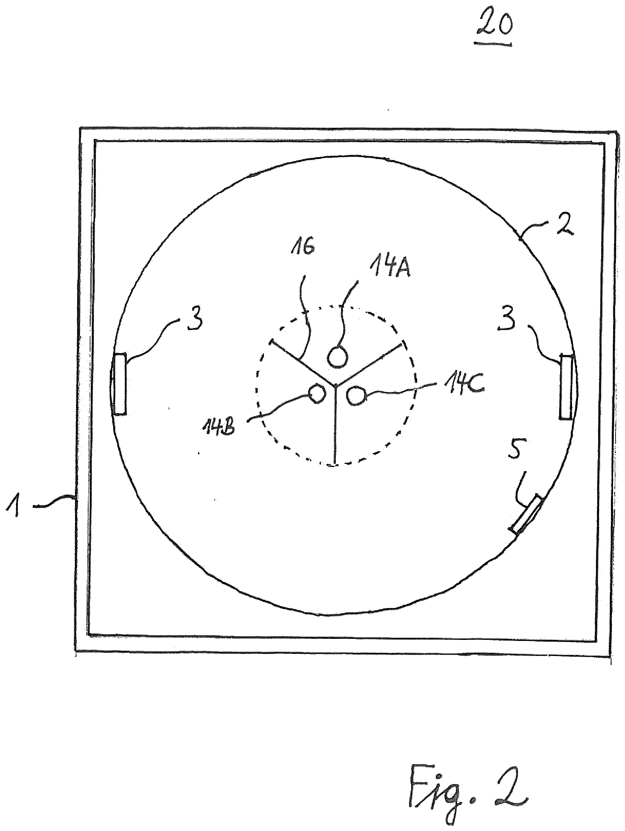

Die Vorrichtung kann zwei oder drei Strahlungsquellen und gegebenenfalls auch mehr als drei Strahlungsquellen aufweisen. In der Fig. 2 ist ein Ausführungsbeispiel dargestellt, welches eine Vorrichtung 20 in einem Querschnitt zeigt. Die Fig. 2 zeigt eine Vorrichtung 20 mit drei Strahlungsquellen 14A, 14B und 14C. Auch die Strahlungsquellen 14A, 14B und 14C können unabhängig voneinander betreibbar bzw. ansteuerbar sein. Darüber hinaus können sie zylindersymmetrisch um eine Mittel- oder Symmetrieachse angeordnet sein, welche gleichzeitig die Drehachse des Halterungsrahmens 2 sein kann. Es sollte noch erwähnt werden, dass die Strahlungsquellen 14A,B,C nicht notwendigerweise zylindersymmetrisch zur Drehachse des Halterungsrahmens 2 angeordnet sein müssen, denn infolge der Drehbewegung der Proben 3 während der Analyse werden die Proben 3 ohnehin im Mittel gleichmäßig mit der Strahlung der Strahlungsquellen beaufschlagt. Die Vorrichtung 20 der Fig. 2 weist einen Strahlungssensor 5 auf, welcher wie die Proben 3 an dem Halterungsrahmen 2 befestigt ist und mit den Proben 3 um die aus den mehreren Strahlungsquellen 14A,B,C bestehende Strahlungsanordnung umläuft. Der Strahlungssensor 5 kann so ausgebildet sein, dass er eine von ihm detektierte momentane Strahlungsleistung als ein entsprechendes elektrisches Messsignal ausgibt. Es kann ferner vorgesehen sein, dass zwischen den Strahlungsquellen 14A, 14B und 14B Absorberbleche 16 angeordnet sind, so dass der Strahlungssensor 5 in jeder denkbaren Position auf seiner Umlaufbahn jeweils nur die von einer der Strahlungsquellen 14A,B,C emittierte Strahlung detektiert. Der Strahlungssensor 5 kann wie dargestellt gegenüber den Proben 3 in Umfangsrichtung der Halterungseinrichtung 2 versetzt angeordnet sein. Er könnte ebenso gut auch ohne Umfangsversetzung in Höhenrichtung gegenüber den Proben 3 oder sowohl in Höhen- als auch in Umfangsrichtung gegenüber den Proben 3 versetzt angeordnet sein. Es können bei den Ausführungsformen der Figuren 1 und 2 gegebenenfalls auch zwei oder mehr umlaufende Strahlungssensoren vorhanden sein.

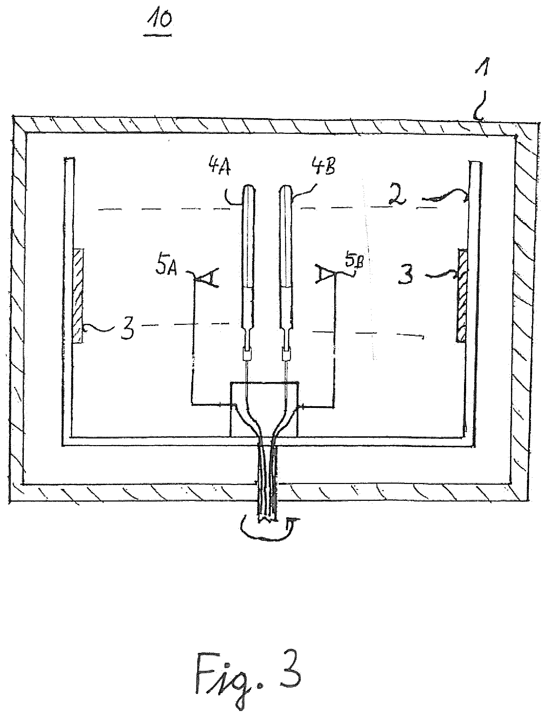

In der Fig. 3 ist eine weitere Ausführungsform in einem Längsschnitt schematisch dargestellt. Sie gleicht im Wesentlichen der Ausführungsform der Fig. 1A,B, bis auf die Tatsache, dass kein mitlaufender Strahlungssensor sondern stationäre Strahlungssensoren 5A, 5B angeordnet sind, welche die Strahlungsleistung der von den Strahlungsquellen 4A und 4B emittierten Strahlung detektieren. Die Strahlungssensoren 5A, 5B können insbesondere derart angeordnet sein, dass jeder der Strahlungssensoren 5A und 5B jeweils nur die von einer der beiden Strahlungsquellen 4A und 4B emittierte Strahlungsleistung detektiert. Die Ausgangssignale der Strahlungssensoren 5A und 5B können einer externen Steuereinrichtung zugeführt werden, wie nachfolgend noch näher beschrieben wird.

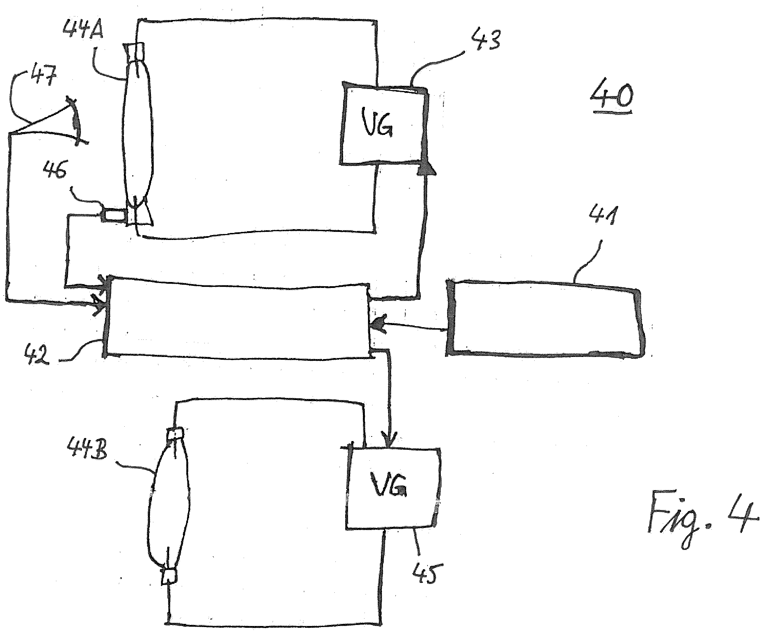

In der Fig. 4 ist ein Blockschaltbild zur Veranschaulichung der Ansteuerung der Strahlungsquellen einer Vorrichtung zur künstlichen Bewitterung oder Lichtechtheitsprüfung dargestellt. Die Schaltungsanordnung 40 dient dazu, zwei verschiedene Strahlungsquellen 44A und 44B unabhängig voneinander anzusteuern. Die Strahlungsquellen der Fig. 4 können durch Gasentladungslampen gebildet sein, welche jeweils mit Vorschaltgeräten verbunden sein können. Eine erste Strahlungsquelle 44A kann mit ihren Anschlusskontakten mit einem ersten Vorschaltgerät 43 verbunden sein und eine zweite Strahlungsquelle 44B kann mit ihren Anschlusskontakten mit einem zweiten Vorschaltgerät 45 verbunden sein. Die beiden Strahlungsquellen 44A und 44B können durch Gasentladungslampen, insbesondere Xenon-Gasentladungslampen, gegeben sein. Die Schaltungsanordnung 40 kann ferner eine Benutzerschnittstelle 41 (user interface) aufweisen, mittels welcher ein Benutzer einen Testlauf zur Bewitterungsprüfung oder Lichtechtheitsprüfung von Proben durch Eingabe einer bestimmten Betriebsart oder bestimmter gewünschter Parameter einleiten kann. Ein gewünschter Parameter kann beispielsweise eine von jeder der beiden Strahlungsquellen 44A und 44B zu emittierenden Strahlungsleistung oder auch eine von beiden additiv zu erbringende Gesamtstrahlungsleistung sein. Die Benutzerschnittstelle 41 kann ausgangsseitig mit einer Steuereinrichtung 42, wie einem Mikro-Controller oder Mikroprozessor, verbunden sein. Die Steuereinrichtung 42 kann zwei verschiedene Ausgänge aufweisen, welche mit den zwei Vorschaltgeräten 43 und 45 verbunden sein können. Die Steuereinrichtung 42 ist somit in der Lage, die Vorschaltgeräte 43 und 45 und somit letztlich die Strahlungsquellen 44A und 44B in unterschiedlicher Weise anzusteuern, insbesondere aufgrund einer an der Benutzerschnittstelle 41 getätigten Eingabe durch einen Benutzer. Es kann beispielsweise ein bestimmter Programmmodus einer bestimmten, vorgegebenen Bezeichnung (etwa XenoLogic) vorgesehen sein, welcher benutzerseitig auswählbar ist und welcher die Steuereinrichtung 42 dazu veranlasst, die Strahlungsquellen 44A und 44B unter Berücksichtigung einer vom Benutzer außerdem noch eingegebenen Gesamtstrahlungsleistung derart zu betreiben, dass für beide eine maximale Nutzungsdauer resultiert. Dies kann beispielsweise bedeuten, dass beim Start eines Testlaufs nur eine der beiden Strahlungsquellen für eine vorgegebene Zeitdauer betrieben wird und anschließend die zweite Strahlungsquelle dazu geschaltet wird. Sollte jedoch beispielsweise ein Gesamtstrahlungsintensität von 60 W/cm² (abhängig vom Lampentyp und in einem bestimmten Abstand zur Lampe) benutzerseitig gewünscht sein, so kann auch vorgesehen sein, von Beginn an beide Strahlungsquellen bei einer Strahlungsintensität von 30 W/cm² zu betreiben.

Der Steuereinrichtung 42 können zusätzlich zu diesen Vorgaben von der Benutzerschnittstelle 41 noch weitere Informationen zugeführt werden, welche sie für die Steuerung der Strahlungsquellen 44A und 44B verwenden kann. So kann beispielsweise, wie in den vorherigen Ausführungsbeispielen gezeigt, ein Strahlungssensor 47 vorgesehen sein, welcher die jeweils von den Strahlungsquellen 44A,B emittierte Strahlung detektiert und ein die detektierte Strahlungsleistung repräsentierendes Messsignal der Steuereinrichtung 42 übermittelt. Der Strahlungssensor 47 kann als umlaufender Strahlungssensor ausgebildet sein. In der Darstellung der Fig. 4 ist der Strahlungssensor 47 momentan auf die Strahlungsquelle 44A ausgerichtet und misst somit momentan deren emittierte Strahlungsleistung. Sollte nun beispielsweise die Strahlungsquelle 44A in ihrer Leistungsfähigkeit nachlassen und der Strahlungssensor 47 dies entsprechend detektieren und an die Steuereinrichtung 42 melden, so kann die Steuereinrichtung 42 vorsehen, dass eine entsprechend höhere elektrische Leistung an das Vorschaltgerät 43 geliefert wird. In gleicher Weise kann auch die von der zweiten Strahlungsquelle 44B emittierte Strahlung von dem Strahlungssensor 47 detektiert werden und ein die Strahlungsleistung repräsentierendes Messsignal an die Steuereinrichtung 42 geliefert werden.

Es kann auch vorgesehen sein, dass eine oder beide der Strahlungsquellen 44A und 44B mit einer Speichereinrichtung 46, insbesondere einem elektronischen Schaltkreis wie einem RFID-Chip, versehen sind, auf welchem eine Code oder andere Daten verschiedenster Art wie beispielsweise die geleisteten Betriebsstunden der Strahlungsquelle speicherbar sind. Der RFID-Chip 46 kann insbesondere untrennbar mit der jeweiligen Strahlungsquelle verbunden sein, insbesondere kann vorgesehen sein, dass er nicht benutzerseitig von der Strahlungsquelle abgetrennt werden kann, ohne Beschädigungen zu verursachen. Beim Betrieb der Strahlungsquelle kann durch die Steuereinrichtung 42 gemessen werden, wie lange und bei welcher Ausgangsstrahlungsleistung die Strahlungsquelle bereits betrieben worden ist und das Ergebnis kann auf dem elektronischen Schaltkreis gespeichert werden. Bei jeder neuen Inbetriebnahme der Strahlungsquelle kann zunächst der elektronische Schaltkreis 46 ausgelesen werden und das Ergebnis kann der Steuereinrichtung 42 zugeführt werden, welche dieses für ihre Berechnung der optimalen Betriebsweise dieser und der anderen Strahlungsquellen für einen folgenden Testlauf berücksichtigt. Es kann des Weiteren noch vorgesehen sein, dass in der Steuereinrichtung 42 ein Expertensystem abgelegt ist, welchem sämtliche Daten, insbesondere Sensordaten, verbleibende Lebensdauerdaten, gewünschte Gesamtstrahlungsleistung etc., zugeführt werden können, und welches daraufhin entscheidet, in welcher Weise die Strahlungsquellen mit dem Ziel einer möglichst langen Nutzungsdauer betrieben werden sollten.

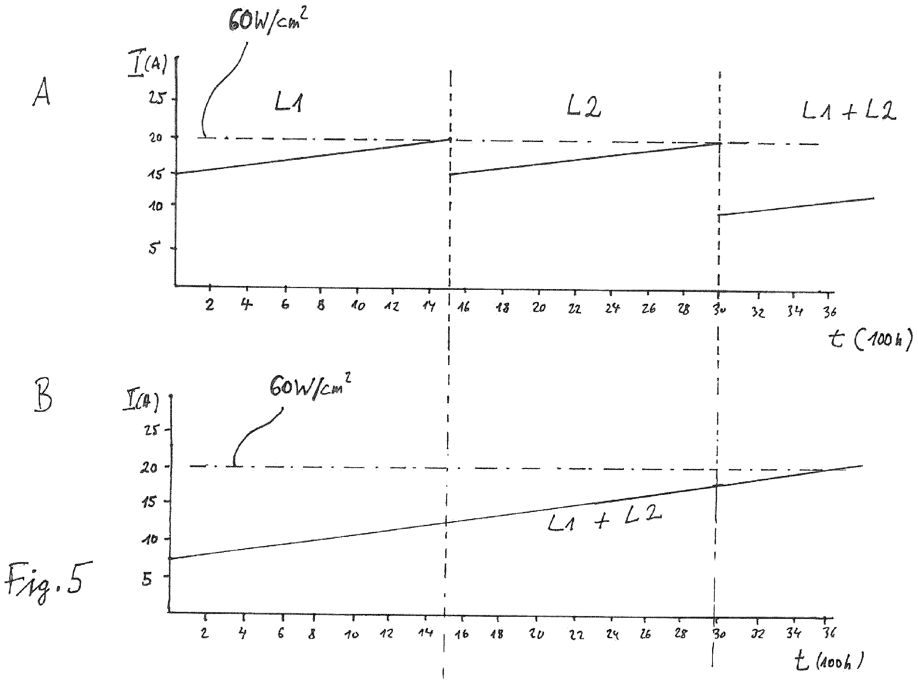

In Fig. 5A ist ein Zeitdiagramm zur Erläuterung einer möglichen Betriebsweise zweier Strahlungsquellen eines Bewitterungsgeräts dargestellt. Es wird davon ausgegangen, dass zwei Strahlungsquellen L1 und L2 vorhanden sind und das benutzerseitig eine gewünschte Gesamtstrahlungsintensität von 60 W/cm² eingegeben wurde, welche im Diagramm durch die strichpunktierte Linie gekennzeichnet ist. Die Betriebsart besteht im Wesentlichen darin, während einer ersten 1500 Stunden dauernden Phase nur die erste Strahlungsquelle L1 zu betreiben, während einer zweiten ebenfalls 1500 Stunden dauernden Phase nur die zweite Strahlungsquelle L2 zu betreiben, und während einer dritten Phase beide Strahlungsquellen L1 und L2 zu betreiben. In jeder der drei Phasen sollen die Strahlungsquellen so mit elektrischer Leistung beschickt werden, dass eine Gesamtstrahlungsintensität von 60 W/cm² resultiert. Für die erste Phase bedeutet dies, dass die erste Strahlungsquelle L1 im Anfangszeitpunkt mit einem Strom von 15 A beschickt wird, welcher über die Dauer der ersten Phase von 1500 Stunden kontinuierlich und linear auf einen Wert von 20 A erhöht wird. Diese Steigerung ist notwendig, da aufgrund der kontinuierlichen Leistungsabnahme der Strahlungsquelle nur so die Strahlungsintensität von 60 W/cm² konstant gehalten werden kann. Nach 1500 Betriebsstunden ist die nominelle und garantierte Lebensdauer der ersten Strahlungsquelle L1 erreicht. Die erste Strahlungsquelle L1 wird dann abgeschaltet und zeitgleich wird die zweite Strahlungsquelle L2 eingeschaltet und auf dieselbe Weise betrieben wir die erste Strahlungsquelle L1 während der ersten Phase. Nach Ablauf von weiteren 1500 Stunden der zweiten Strahlungsquelle L2 werden beide Strahlungsquellen L1 und L2 mit 10 A betrieben, wobei auch dieser Wert linear mit der Zeit erhöht wird, wodurch die Ausgangsstrahlungsintensität von 60 W/cm² konstant beibehalten wird. Dies kann dann solange betrieben werden, bis eine oder beide der Strahlungsquellen am tatsächlichen Ende ihrer Lebensdauer angelangt sind. Da beide Strahlungsquellen nur bis zu ihrer nominellen Lebensdauer von 1500 Stunden betrieben werden und anschließend in der dritten Phase nur auf einem erheblich niedrigeren Pegel weiterbetrieben werden, kann eine Erhöhung der Nutzungsdauer erzielt werden.

In der Fig. 5B ist ein weiteres Zeitdiagramm zur Erläuterung einer weiteren Betriebsart dargestellt. Auch bei dieser Betriebsart wird davon ausgegangen, dass benutzerseitig eine Gesamtstrahlungsleistung von 60 W/cm2 am User Interface eingestellt wurde. Diese Betriebsart sieht jedoch vor, über die gesamte Zeitdauer beide Strahlungsquellen L1 und L2 zu betreiben. Das bedeutet, dass zum Anfangszeitpunkt beide Strahlungsquellen mit einem Eingangsstrom von 7,5 A beschickt werden und dieser Strom kontinuierlich und linear gesteigert wird, um konstant die Strahlungsleistung von 60 W/cm2 erzielen zu können. Da beide Strahlungsquellen somit nur auf einem relativ niedrigen Pegel beansprucht werden, kann eine höhere Nutzungsdauer erzielt werden.

Bei beiden Zeitdiagrammen wird davon ausgegangen, dass die Steigerung der elektrischen Leistung auf Erfahrungswerten beruht und vorab in der Steuerung festgelegt wird. Es kann jedoch auch so vorgegangen werden, dass die Strahlungsleistung jeder der Strahlungsquellen L1 und L2 durch einen Strahlungssensor - wie in den Ausführungsbeispielen der Figuren 1 bis 4 beschrieben - gemessen und der Steuereinrichtung 42 zugeführt wird, welche dementsprechend die elektrische Leistungszufuhr zu der jeweiligen Strahlungsquelle bzw. dem Vorschaltgerät regelt. Des Weiteren kann berücksichtigt werden, dass eine oder beide der Strahlungsquellen L1 und L2 bereits früher aktiviert worden sind und somit schon eine bestimmte Anzahl Betriebsstunden abgeleistet haben, welche auf ihrer Speichereinrichtung, insbesondere dem RFID-Chip, gespeichert sind. Dieser wird durch die Steuereinrichtung 42 ausgelesen, welche dementsprechend reagiert und die eine oder die beiden Strahlungsquellen entsprechend geringeren Belastungen aussetzt.

## Patentansprüche

1. Vorrichtung zur künstlichen Bewitterung oder Lichtechtheitsprüfung von Proben, mit
einer Bewitterungskammer (1), in welcher mindestens eine Probe (3) anordenbar ist;
einer Mehrzahl von Strahlungsquellen (4), welche in der Bewitterungskammer (1) angeordnet sind und welche unabhängig voneinander betreibbar sind, wobei
die Vorrichtung derart konfiguriert ist, dass die mindestens eine Probe (3) auf einer geschlossenen Bahn um die Mehrzahl von Strahlungsquellen (4) bewegbar ist,
**dadurch gekennzeichnet, dass** die Strahlungsquellen (4) durch Xenon-Gasentladungslampen gebildet sind,
die Strahlungsquellen (4) zeitlich nacheinander und/oder mindestens teilweise gleichzeitig betreibbar sind, und ferner mit einer Steuereinrichtung, welche konfiguriert ist, Steuersignale zur Ansteuerung der Strahlungsquellen (4) zu erzeugen und welche eine Mehrzahl von Ausgängen aufweist, welche mit der Mehrzahl von Strahlungsquellen (4) verbindbar sind, wobei die Steuereinrichtung konfiguriert ist, aufgrund einer nutzerseitig gewünschten kombinierten Strahlungsleistung der Strahlungsquellen (4) einen optimalen Betriebsmodus zu ermitteln, bei welchem die Strahlungsquellen (4) geringstmöglichen Belastungen ausgesetzt sind.

2. Vorrichtung nach Anspruch 1, bei welcher
zwei oder drei Strahlungsquellen (4) in der Bewitterungskammer (1) angeordnet sind.

3. Vorrichtung nach einem der vorhergehenden Ansprüche, ferner mit
mindestens einem Sensor zum Erfassen der Strahlungsleistung der Strahlungsquellen (4).

4. Vorrichtung nach Anspruch 3, mit
einer Mehrzahl von Sensoren, wobei jeder Sensor einer der Strahlungsquellen (4) zugeordnet und derart angeordnet ist, dass er die Strahlungsleistung der zugeordneten Strahlungsquelle (4) misst und ein Ausgang jedes Sensors mit einem Eingang der Steuereinrichtung zur Übermittlung eines die gemessene Strahlungsleistung repräsentierenden Signals verbunden ist.

5. Vorrichtung nach einem der vorhergehenden Ansprüche, bei welcher
die Steuereinrichtung ein Expertensystem zur Ermittlung des optimalen Betriebsmodus aufweist.

6. Vorrichtung nach einem der vorhergehenden Ansprüche, bei welcher
jede Strahlungsquelle (4) mit einem der Identifizierung der Strahlungsquelle (4) dienenden elektronischen Schaltkreis, insbesondere einem RFID-Chip versehen ist.

7. Vorrichtung nach Anspruch 6, bei welcher
die geleisteten Betriebsstunden und/oder eine restliche Lebensdauer der Strahlungsquelle (4) ermittelbar und auf dem elektronischen Schaltkreis speicherbar ist.

8. Vorrichtung nach Anspruch 7, bei welcher
der elektronische Schaltkreis jeder der Strahlungsquellen (4) durch die Steuereinrichtung auslesbar ist und der ausgelesene Wert der geleisteten Betriebsstunden und/oder der restlichen Lebensdauer von der Steuereinrichtung für die Ermittlung des optimalen Betriebsmodus verwendet wird.

9. Verfahren zur künstlichen Bewitterung oder Lichtechtheitsprüfung von Proben, mit den Schritten:
a. Bereitstellen einer Bewitterungskammer (10; 20), welche zwei unabhängig voneinander betreibbare Strahlungsquellen (4) und eine Halterungseinrichtung für Proben (3) aufweist, durch welche die Proben (3) auf einer geschlossenen Bahn um die Strahlungsquellen (4) führbar sind;
b. Anordnen mindestens einer Probe (3) in der Halterungseinrichtung; und
c. Bestrahlen der Probe (3) mit Strahlung der Strahlungsquellen (4), wobei die Strahlungsquellen (4) zeitlich nacheinander und/oder mindestens teilweise gleichzeitig betrieben werden,
**dadurch gekennzeichnet, dass**
die Strahlungsquellen (4) durch Xenon-Gasentladungslampen gebildet sind; und
die Strahlungsquellen (4) mit Steuersignalen einer Steuereinrichtung angesteuert werden, welche aufgrund einer nutzerseitig gewünschten kombinierten Strahlungsleistung der Strahlungsquellen (4) einen optimalen Betriebsmodus ermittelt, bei welchem die Strahlungsquellen (4) geringstmöglichen Belastungen ausgesetzt sind.

10. Verfahren nach Anspruch 9, bei welchem
die gesamte voraussichtliche Nutzungsdauer beider Strahlungsquellen (4) in drei Phasen eingeteilt wird, wobei in einer ersten Phase nur eine erste Strahlungsquelle (4) betrieben wird, in einer zweiten Phase nur eine zweite Strahlungsquelle (4) betrieben wird, und in einer dritten Phase beide Strahlungsquellen (4) gleichzeitig betrieben werden.

## Claims

1. An apparatus for artificial weathering or lightfastness testing of samples, comprising
a weathering chamber (1) in which at least one sample (3) can be arranged;
a plurality of radiation sources (4) which are arranged in the weathering chamber (1) and which can be operated independently of one another, wherein
the apparatus is configured such that the at least one sample (3) is movable on a closed path about the plurality of radiation sources (4),
**characterized in that**
the radiation sources (4) are formed by xenon gas discharge lamps, the radiation sources (4) can be operated successively in time and/or at least partially simultaneously, and
further comprising control means configured to generate control signals for driving said radiation sources (4) and having a plurality of outputs connectable to said plurality of radiation sources (4), wherein
the control device is configured to determine an optimum operating mode on the basis of a combined radiation power of the radiation sources (4) desired by the user, in which the radiation sources (4) are exposed to the lowest possible loads.

2. The apparatus according to claim 1, in which two or three radiation sources (4) are arranged in the weathering chamber (1).

3. The apparatus according to one of the preceding claims, furthermore with
at least one sensor for detecting the radiant power of the radiation sources (4).

4. The apparatus according to claim 3, with
a plurality of sensors, each sensor being associated with one of the radiation sources (4) and arranged to measure the radiant power of the associated radiation source (4) and an output of each sensor being connected to an input of the control means for transmitting a signal representing the measured radiant power.

5. The apparatus according to one of the preceding claims, in which
the control means comprises an expert system for determining the optimum operating mode.

6. The apparatus according to one of the preceding claims, in which
each radiation source (4) is provided with an electronic circuit, in particular an RFID chip, serving to identify the radiation source (4).

7. The apparatus according to claim 6, in which the operating hours performed and/or a remaining service life of the radiation source (4) can be determined and stored on the electronic circuit.

8. The apparatus according to claim 7, in which the electronic circuit of each of the radiation sources (4) is readable by the control means and the read-out value of the operating hours performed and/or the remaining life is used by the control means for determining the optimum operating mode.

9. A method for artificial weathering or lightfastness testing of samples, comprising the steps:
a. Providing a weathering chamber (10; 20) comprising two independently operable radiation sources (4) and a sample holder (3) through which the samples (3) can be guided in a closed path around the radiation sources (4);
b. Arranging at least one sample (3) in the sample holder; and
c. Irradiating the sample (3) with radiation from the radiation sources (4), wherein the radiation sources (4) are operated successively in time and/or at least partially simultaneously,
**characterized in that**
the radiation sources (4) are formed by xenon gas discharge lamps; and
the radiation sources (4) are driven by control signals of a control device which determines an optimum operating mode on the basis of a combined radiation power of the radiation sources (4) desired by the user, in which mode the radiation sources (4) are exposed to the lowest possible loads.

10. The method according to claim 9, in which
the total expected useful life of both radiation sources (4) is divided into three phases, wherein
in a first phase only a first radiation source (4) is operated, in a second phase only a second radiation source (4) is operated, and in a third phase both radiation sources (4) are operated simultaneously.

## Revendications

1. Appareils d'essai de vieillissement artificiel ou de résistance à la lumière d'échantillons, comprenant une chambre de vieillissement (1) dans laquelle au moins un échantillon (3) peut être disposé ;
une pluralité de sources de rayonnement (4) qui sont disposées dans la chambre de vieillissement (1) et qui peuvent fonctionner indépendamment les unes des autres, où
l'appareil est configuré de telle sorte que l'au moins un échantillon (3) est mobile sur un chemin fermé autour de la pluralité de sources de rayonnement (4),
caractérisé en que
les sources de rayonnement (4) sont formées par des lampes à décharge à gaz xénon,
les sources de rayonnement (4) peuvent être exploitées successivement dans le temps et/ou au moins partiellement simultanément, et
comprenant en outre des moyens de commande configurés pour générer des signaux de commande pour commander lesdites sources de rayonnement (4) et ayant une pluralité de sorties pouvant être connectées à ladite pluralité de sources de rayonnement (4), où l'appareil de commande est configuré pour déterminer un mode de fonctionnement optimal dans lequel les sources de rayonnement (4) sont exposées aux charges les plus faibles possibles sur la base d'une puissance de rayonnement combinée des sources de rayonnement (4) souhaitée par l'utilisateur.

2. Appareil selon la revendication 1, dans lequel
deux ou trois sources de rayonnement (4) sont disposées dans la chambre de vieillissement (1).

3. Appareil selon l'une des revendications précédentes, en outre avec
au moins un capteur pour détecter la puissance de rayonnement des sources de rayonnement (4).

4. Appareil selon la revendication 3, avec
une pluralité de capteurs, chaque capteur étant associé à l'une des sources de rayonnement (4) et agencé pour mesurer la puissance de rayonnement de la source de rayonnement associée (4) et une sortie de chaque capteur étant connectée à une entrée du moyen de commande pour transmettre un signal représentant la puissance de rayonnement mesurée.

5. Appareil selon l'une des revendications précédentes, dans lequel
le moyen de commande comprend un système expert pour déterminer le mode de fonctionnement optimal.

6. Appareil selon l'une des revendications précédentes, dans lequel
chaque source de rayonnement (4) est munie d'un circuit électronique, en particulier une puce RFID, servant à identifier la source de rayonnement (4).

7. Appareil selon la revendication 6, dans lequel
les heures de fonctionnement effectuées et/ou une durée de vie restante de la source de rayonnement (4) peuvent être déterminées et enregistrées sur le circuit électronique.

8. Appareil selon la revendication 7, dans lequel
le circuit électronique de chacune des sources de rayonnement (4) peut être lu par le moyen de commande et la valeur affichée des heures de fonctionnement effectuées et/ou la durée de vie restante est utilisée par le moyen de commande pour déterminer le mode de fonctionnement optimal.

9. Méthode d'altération artificielle par les intempéries ou d'essai de résistance à la lumière des échantillons, comprenant les étapes suivantes :
a. Prévoir une chambre de vieillissement (10 ; 20) comprenant deux sources de rayonnement (4) pouvant fonctionner indépendamment l'une de l'autre et un support d'échantillon (3) à travers lequel les échantillons (3) peuvent être guidés dans un trajet fermé autour des sources de rayonnement (4);
b. Disposer au moins un échantillon (3) dans le dispositif de retenue; et
c. Irradier l'échantillon (3) par le rayonnement des sources de rayonnement (4), les sources de rayonnement (4) fonctionnant successivement dans le temps et/ou au moins partiellement simultanément,
caractérisé en que
les sources de rayonnement (4) sont formées par des lampes à décharge à gaz xénon; et
les sources de rayonnement (4) sont entraînées par des signaux de commande d'un dispositif de commande qui détermine un mode de fonctionnement optimal sur la base d'une puissance de rayonnement combinée des sources de rayonnement (4) souhaitée par l'utilisateur, mode dans lequel les sources de rayonnement (4) sont exposées aux charges les plus faibles possibles.

10. Méthode selon la revendication 9, dans laquelle
la durée de vie utile totale prévue des deux sources de rayonnement (4) est divisée en trois phases, dans lesquelles dans une première phase, seule une première source de rayonnement (4) est exploitée, dans une deuxième phase, seule une deuxième source de rayonnement (4) est exploitée, et dans une troisième phase, les deux sources de rayonnement (4) fonctionnent simultanément.
